# EUROPÄISCHE PATENTSCHRIFT

(11) **EP 0 979 169 B1**
(45) Veröffentlichungstag und Bekanntmachung des Hinweises auf die Patenterteilung: **05.12.2001**
(21) Anmeldenummer: 98921420.0
(22) Anmeldetag: 02.04.1998
(51) Int. Cl.: B32B 31/12, G11B 7/26, B05B 5/10

(54) **VERFAHREN UND VORRICHTUNG ZUM VERKLEBEN VON ZWEI SUBSTRATEN**
METHOD AND DEVICE FOR GLUING TWO SUBSTRATES
PROCEDE ET DISPOSITIF POUR ASSEMBLER DEUX SUBSTRATS PAR COLLAGE

(30) Priorität: 30.04.1997 DE 19718471
(43) Veröffentlichungstag der Anmeldung: 16.02.2000
(60) Teilanmeldung: 99120206.0
(73) Patentinhaber: Steag HamaTech AG, 75447 Sternenfels (DE)
(72) Erfinder: WEBER, Klaus, D-75015 Bretten (DE); SPEER, Ulrich, D-75239 Eisingen (DE)
(74) Vertreter: Wagner, Karl H., Dipl.-Ing.
(86) Internationale Anmeldenummer: EP9801934
(87) Internationale Veröffentlichungsnummer: WO9849010

(56) Entgegenhaltungen:
- EP-A- 0 618 504
- WO-A-97/36737
- WO-A-97/43111
- DE-A- 4 041 199
- DE-A- 19 545 843
- DE-A- 19 718 471
- US-A- 3 707 944
- US-A- 4 942 073
- US-A- 4 990 208
- US-A- 5 779 855
- PATENT ABSTRACTS OF JAPAN vol. 012, no. 267 (M-722), 26. Juli 1988 & JP 63 049424 A (SONY CORP), 2. März 1988 & JP 63 049424 A (SONY) 2. März 1988
- PATENT ABSTRACTS OF JAPAN vol. 097, no. 009, 30. September 1997 & JP 09 128823 A (KITANO ENG KK), 16. Mai 1997 & US 5 779 855 A (AMO ET AL.) 14. Juli 1998
- PATENT ABSTRACTS OF JAPAN vol. 018, no. 502 (M-1676), 20. September 1994 & JP 06 170855 A (RICOH CO LTD), 21. Juni 1994

## Beschreibung

Die Erfindung betrifft ein Verfahren und eine Vorrichtung zum Verkleben von zwei Substraten zu einer Substratscheibe, bei dem ein Klebemittel auf eine zu verklebende Fläche eines ersten Substrats aufgebracht, und ein zweites Substrat mit seiner zu verklebenden Fläche auf das erste Substrat aufgelegt wird, und bei dem die Substrate zum Ausschleudern des Klebemittels um ihre Mittelachsen gedreht werden.

Verfahren und Vorrichtungen dieser Art sind aus DE-A-40 41 199, Derwent-Abstract 94-246139/30 und EP 0 744 739 A1 bekannt, um beispielsweise sogenannte Digital-Video-Disks (auch unter der Abkürzung DVD bekannt), zu fertigen. Digital-Video-Disks bestehen aus zwei Substraten oder Teilsubstraten, auf denen auf jeweils einer Oberfläche Digital-Video-Informationen gespeichert sind, und die mit ihren informationsfreien Seiten miteinander verklebt sind. Für das Verbinden der beiden Substrate zu einer Substratscheibe, beispielsweise einer Digital-Video-Disk, sind sehr genau arbeitende Vorrichtungen erforderlich, da die Substrate nicht nur sehr lagegenau übereinander angeordnet werden müssen, sondern der Klebevorgang über die gesamte Scheibenfläche hinweg gleichmäßig und ohne Lufteinschlüsse oder unterschiedlich dicke Klebemittelschichten durchgeführt werden muß, um fehlerfreie Substratscheiben zu erhalten. Darüber hinaus sind die herkömmlichen Vorrichtungen zum Verkleben von zwei Substraten konstruktionsmäßig sehr aufwendig und nehmen einen großen Raum ein.

Aus der US-A-4 990 208 ist ein Verfahren und eine Vorrichtung zur Herstellung optischer Speichermedien aus zwei Substraten bekannt, bei dem bzw. bei der während des Aushärtvorgangs mittels UV-Strahlung eine Quarzglasplatte auf dem Substrat zur Ausübung eines Druckes aufliegt. Ein Aushärtvorgang bei der Herstellung von optischen Speichermedien ist weiterhin aus der US-A-5 779 855 bekannt. Bei diesem Verfahren liegt das optische Speichermedium während des Aushärtvorgangs zwischen ultraviolette Strahlung durchlassenden Platten. Aus PATENT ABSTRACTS OF JAPAN Vol. 018, No. 502 (M-1676), 20. September 1994 & JP 06 170855A(RICOH CO LTD), 21. Juni 1994 ist eine Vorrichtung zum Aushärten eines Kunststofffilms mit ultravioletter Strahlung bekannt, bei der zur Temperaturabführung Stickstoff seitlich eingeführt und über eine zentrale Öffnung nach oben ausgeleitet wird.

Die Druckschrift PATENT ABSTRACTS OF JAPAN Vol. 012, No. 267 (M-722), 26. Juli 1988 & JP 63 049424 A (SONY CORP), 2. März 1988 & JP 63 049424 A (SONY) 2. März 1988 beschreibt ein Verfahren, bei dem miteinander zu verklebende Scheiben bezüglich um 90° zueinander versetzte Geraden gebogen werden, so daß zunächst nur an einer bestimmten Stelle ein Kontaktpunkt zwischen den Scheiben auftritt.

Der Erfindung liegt die Aufgabe zugrunde, ein Verfahren und eine Vorrichtung zum Verkleben von zwei Substraten zu schaffen, das bzw. die ein zuverlässiges, gleichmäßiges Verkleben der Substrate ermöglicht, zu guten Substratscheiben mit geringen Ausschußraten führt und dennoch einfach durchgeführt werden kann bzw. die konstruktiv einfach ist und eine hohe Produktivität ermöglicht.

Die gestellte Aufgabe wird erfindungsgemäß durch ein eingangs genanntes Verfahren gelöst, bei dem wenigstens eine der zu verklebenden Flächen der Substrate, vorzugsweise die zu verklebende Fläche des Substrats, auf die das eigentliche Klebemittel aufgebracht wird, mit einer Vorbeschichtung versehen wird. Auf diese Weise wird die Gleitfähigkeit für das Hauptklebemittel bzw. den Hauptlack wesentlich verbessert, so daß die Klebemittel-Verteilung über die gesamte Fläche hinweg nicht nur schneller, sondern auch gleichmäßiger erfolgt. Die Vorbeschichtung ermöglicht es, das Klebemittel zwischen den zu verklebenden Substraten auf einfache Weise über die gesamte zu verklebende Fläche hinweg sehr gleichmäßig zu verteilen und Einschlüsse, wie Luftblasen oder dgl., zu vermeiden. Die Substrate haften daher über die gesamte Substratfläche hinweg fest aneinander und insbesondere weisen die Substratscheiben über die gesamte Fläche hinweg eine gleichmäßige Dicke auf.

Das Klebemittel ist vorzugsweise ein sogenannter Ultraviolett-Kunststofflack, der durch Bestrahlen mit ultraviolettem Licht schnell aushärtet und eine gute Haftwirkung zwischen den beiden Substraten ermöglicht. Vorzugsweise wird das Klebemittel als Klebering auf eine zu verklebende Fläche eines Substrats aufgebracht, das dann durch den Schleudervorgang über die gesamte Substratfläche verteilt wird.

Vorzugsweise wird ein einstellbarer, genauer Druck auf das auf das erste Substrat aufgebrachte zweite Substrat nach dem Auflegen ausgeübt, der die gleichmäßige Verteilung des Klebemittels zwischen den Substraten verbessert. Das obere, aufzulegende Substrat wird dabei vorzugsweise über einen Einarmhändler mit Präzisionsantrieb in einer Feinbewegung genau zentrisch auf das erste Substrat aufgebracht und ein entsprechender Druck ausgeübt.

Vorzugsweise wird wenigstens eines der Substrate beim Auflegen auf das andere Substrat in den Randbereichen vom anderen Substrat weg gebogen, und zwar dadurch, daß zum Verbiegen wenigstens eines der Substrate ein Innengreifer und ein Außengreifer relativ zueinander bewegt werden. Dadurch werden Luftblasen oder sonstige Einschlüsse in der Klebeschicht oder im Klebemittel sicherer und zuverlässiger entfernt. Da durch das Verbiegen des aufzulegenden Substrats dieses zunächst in der Mitte aufliegt, und dann erst bei vollständiger Freigabe sich sozusagen von innen nach außen abwälzt, wird der Klebemittelring von innen nach außen zu den Substraträndern hin gedrückt und ausgewalzt, so daß dadurch auch Lufteinschlüsse und Blasen entfernt werden.

Eine weitere bevorzugte Ausgestaltung der Erfindung besteht darin, die Ränder der verklebten Substrate nach dem Ausschleudern des Klebemittels zu reinigen. Auf Grund des Reinigungsvorgangs ergibt sich zusätzlich auch eine zuverlässige Versiegelung des Substratscheiben-Randes, die zu einer Erhöhung der Qualität des fertigen Produkts beiträgt. Zum Reinigen des Substratscheiben-Randes ist vorzugsweise eine Klebemittel-Absaugrichtung vorgesehen, die federnd an den Substratscheiben-Rand angedrückt wird. Zur Erhöhung der Produktivität erfolgt diese Reinigung des Substratrandes unmittelbar nach dem Ausschleudervorgang des Klebemittels, ohne daß für die Randreinigung eine zusätzliche Lageveränderung der Substratscheiben oder eine eigene Reinigungsstation erforderlich ist.

Die verklebten Substratscheiben werden vorzugsweise in einem Klebemittel-Trockner, bei Verwendung eines UV-Lacks in einem UV-Trockner, getrocknet, wodurch der Herstellungsvorgang wesentlich verkürzt wird. Ein derartiger Klebemittel-Trockner kann beispielsweise entsprechend einer Vorrichtung ausgebildet sein, wie sie in der nicht vorveröffentlichten, auf dieselbe Anmelderin zurückgehenden DE-A-197 21 689 beschrieben ist, und die zur Vermeidung von Wiederholungen insofern zum Gegenstand der vorliegenden Anmeldung gemacht wird. Die Substratscheiben können dabei beispielsweise bei drehender Bewegung unter einer UV-Lampe hindurchgeführt werden.

Vorzugsweise wird eine Quarz- oder Glasplatte während des Trocknungsvorgangs auf die Substratscheibe aufgelegt, wobei sie mit ihrem Eigengewicht während des Trocknens auf die Substratscheibe drückt und diese eben hält und nach dem Trocknungsvorgang, während dem sie aufgeheizt wird, gekühlt wird, bevor sie auf die nächste Substratscheibe aufgelegt wird. Die Kühlung der Quarz- oder Glasplatte erfolgt gemäß einem Ausführungsbeispiel mit ionisierter Luft, wobei die Glasplatten mit einem Wechselsystem jeweils zwischen dem Kühlvorgang und dem Aufbringen auf die Substratscheibe verschoben wird. Auch ist es vorteilhaft, die Trocknung in einer Stickstoffumgebung vorzunehmen, die zur schnelleren und endgültigen Trocknung der Substratscheiben beiträgt.

Nach dem Klebe- und Trocknungsvorgang werden die Substratscheiben in einer Inspektionsstation, beispielsweise mit einem Scanner, auf Fehler überprüft und je nach den dabei gewonnenen Meßergebnissen freigegeben oder als Ausschuß ausgesondert.

Das erfindungsgemäße Verfahren wird mit einem Datenverarbeitungsprogramm, das beispielsweise in einem Personal Computer abläuft, gesteuert und/oder visualisiert.

Die gestellte Aufgabe wird weiterhin durch eine Vorrichtung der eingangs genannten Art gelöst, die eine Vorbeschichtungs- oder Vordispensoreinrichtung aufweist, die in Ablaufrichtung des Fertigungsverfahrens vor der Verklebestation bzw. vor der Klebemittelaufbringeinrichtung angeordnet ist. Durch die Vorbeschichtungseinrichtung wird mindestens eine der zu verklebenden Flächen der Substrate, vorzugsweise die Fläche, auf die das andere Substrat aufgelegt wird, mit einer Vorlackierung versehen, die die Gleitfähigkeit des Klebemittels oder des Hauptlacks verbessert und damit zu einer gleichmäßigeren und schnelleren Verteilung des Hauptlacks während des Auschleudervorgangs führt. Durch entsprechende Substrathandhabungsgeräte insbesondere mit Präzisionsantrieb, wird ein Substrat genau zentrisch auf das andere positioniert und insbesondere auch ein genauer einstellbarer Druck auf das aufzubringende Substrat und damit auf das zwischen den beiden Substraten aufgebrachte Klebemittel ausgeübt, der wiederum die Verteilung und die Schnelligkeit derselben während des Klebevorgangs verbessert bzw. erhöht. Die mit dem zuvor beschriebenen erfindungsgemäßen Verfahren erzielten Vorteile werden auch durch die erfindungsgemäße Vorrichtung erreicht, nämlich das Klebemittel schnell, zuverlässig und gleichmäßig auf die zu verklebenden Flächen der Substrate zu verteilen, ohne daß Einschlüsse, beispielsweise Lufteinschlüsse, zwischen den Substraten verbleiben, die zu ungleichmäßig dicken Substratscheiben und damit zu Substratscheiben mit minderer Qualität bzw. hohen Ausschußraten führen würden.

Gemäß einer weiteren bevorzugten Ausführungsform der Erfindung ist eine Biegeeinrichtung zum Verbiegen wenigstens eines zu verklebenden Substrats an seinen Randbereichen vom anderen Substrat weg vorgesehen, wobei ein im Innenbereich des zu biegenden Substrats angreifender Innengreifer und ein im Außenbereich des zu biegenden Substrats angreifender Außengreifer verwendet wird, die in Achsenrichtung der Substrate relativ zueinander beweglich sind. Auf diese Weise ergibt sich eine noch bessere Vermeidung von Luftblasen oder sonstigen Einschlüssen in der Klebeschicht, da die beiden zu verklebenden Substrate zunächst von innen zunehmend nach außen zur Auflage kommen und dabei Blasen oder Lufteinschlüsse bei diesem Abrollvorgang nach außen drücken und entfernen, und insbesondere ermöglichen sie die Verbiegung des unteren oder oberen Substrats bezüglich des anderen Substrat. Für das Angreifen des Innen- und/oder Außengreifers sind vorzugsweise Sauger oder Saugergruppen vorgesehen, die etwa beim Außengreifer auch über den gesamten Kreisumfang verteilt angeordnet sein können.

Eine weitere bevorzugte Ausführungsform der Erfindung besteht in einer Vorrichtung, bei der eine Reinigungseinrichtung zum Reinigen des Substratscheibenrandes vorgesehen ist. Der Reinigungsvorgang bewirkt gleichzeitig ein Versiegeln des Substratscheibenrandes, und damit eine Qualitätsverbesserung des erzeugten Produkts. Die Reinigungseinrichtung weist vorzugsweise eine Klebemittel-Absaugeinrichtung auf, die gemäß einer weiteren Ausführungsform der Erfindung federnd am Substratscheibenrand andrückbar ist. Die Reinigungseinrichtung ist dabei vorzugsweise Teil der Klebemittel-Ausschleudereinrichtung, so daß die Substratscheiben für den Reinigungsvorgang nicht zu einer entsprechenden Station transportiert werden müssen, sondern unmittelbar nach Ende des Ausschleudervorgangs in ihrer dafür vorgesehenen Lage an ihren Rändern gereinigt werden.

Der Klebemittel-Ausschleudereinrichtung bzw. der Substratscheibenrand-Reinigungseinrichtung ist vorzugsweise eine Trockenstation nachgeordnet, die bei Verwendung von Klebemittel oder Lack, das bzw. der mit ultraviolettem Licht getrocknet und gehärtet wird, ein Ultraviolett-Trockner ist.

Zur Verbesserung der Qualität der verklebten Scheiben und der Produktivität weist die Trocknerstation vorzugsweise eine Quarz- oder Glasplatten-Auflegeeinheit auf. Die Quarz- oder Glasplatte kann dabei mittels eines Schieber- oder Wechselsystems zwischen dem Substratscheiben-Bereich und einem Kühlbereich hin- und herverschoben werden.

Die Trocknerstation weist vorzugsweise UV-Lampen auf, wobei vorteilhafterweise Reflexionsflächen für die Lampenstrahlung im Bereich der Substratränder vorgesehen sind. Dadurch ist eine Trocknung und Aushärtung des Klebemittels auch in den Rand- und Kantenbereichen der Substratscheibe schnell und zuverlässig möglich. Der Trocknungsstation schließt sich gemäß einer weiteren Ausführungsform der erfindungsgemäßen Vorrichtung eine Inspektionsstation an, in der in Abhängigkeit von den Meßergebnissen des Überprüfungsvorgangs die gefertigen Substratscheiben freigegeben oder als Ausschuß verworfen werden.

Die erfindungsgemäße Vorrichtung ist insbesondere sehr kostengünstig und auf Grund der kompakten Bauweise mit kleinen Abmessungen herstellbar und vorzugsweise mit einer Schutzkabine mit Türen und Fenstern versehen, in der durch eine aufgebrachte sogenannte Flow-Box, also durch eine entsprechende möglichst laminare Strömung ein reinraum-ähnliches Umfeld für die Fertigung der Substratscheiben geschaffen wird. Die erfindungsgemäße Vorrichtung kann sowohl als Einzelmaschine als auch in einer Fertigungslinie integriert eingesetzt werden.

Unter Substratscheiben sind im Zusammenhang mit der vorliegenden Erfindung nicht nur Digital-Video-Disks sondern allgemein Scheiben zu verstehen, die durch Verkleben von mindestens zwei Teilscheiben gebildet werden.

Die Erfindung wird nachstehend anhand bevorzugter Ausführungsbeispiele unter Bezugnahme auf die Figuren näher erläutert. Es zeigen:
- Fig. 1: eine schematische Darstellung der erfindungsgemäßen Vorrichtung in Aufsicht und
- Fig. 2: eine schematische Darstellung einer Ausführungsform für die Biegeeinrichtung.

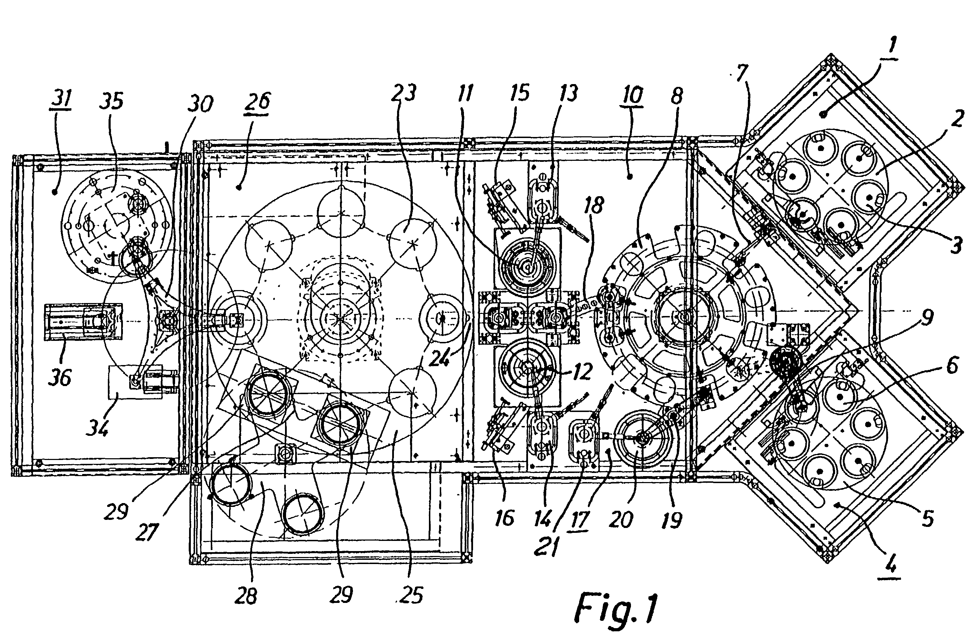

Bei dem in Fig. 1 dargestellten Ausführungsbeispiel für eine erfindungsgemäße Vorrichtung erfolgt die Verfahrensabfolge in Verfahrensschritten von rechts nach links. In einer ersten Geberstation 1 werden auf einem Geberteller 2 erste Substrate 3 bereitgestellt. In entsprechender Weise werden in einer zweiter Geberstation 4 auf einem zweiten Geberteller 5 zweite Substrate 6 bereitgestellt, die mit ihrer keine Informationen aufweisenden Fläche mit der entsprechenden Fläche des ersten Substrats 3 verklebt werden sollen. Mit einem Überkopfhändler 7 werden die ersten Substrate 3 aus der Geberstation 1 entnommen, um 180° gedreht, so daß die zu verklebende, nicht mit Informationen gespeicherte Seite nach oben weist, und auf einen Eingangs-Rundschalttisch 8 an vorgegebenen Stellen abgelegt. Ein Geberhändler 9 transportiert die zweiten Substrate 6 mit der zu verklebenden Seite nach unten, also ohne Drehung der Substrate 6, auf entsprechende Bereiche des Eingangs-Rundschalttischs 8. Der Eingangs-Rundschalttisch 8 weist eine spezielle Aufteilung, nämlich eine Zwei-Positionen-Teilung auf, durch die eine Verwechslung der beiden zu verklebenden Substrate 3 und 6 selbst nach einem Stromausfall vermieden wird.

Der Rundtisch 8 stellt die ersten und zweiten Substrate 3 bzw. 6 einer Verklebestation 10 bereit, die zwei Klebemittel-Ausschleudereinrichtungen oder Prozeßtöpfe 11 und 12 und jeweils eine Klebemittelaufbringeinrichtung bzw. je einem Dispenser 13, 14, jeweils einer Substratscheibenrand-Reinigungseinrichtung 15 bzw. 16, sowie eine Vorbeschichtungseinrichtung bzw. Prodispense-Einheit 17 und entsprechende Händler 18 bzw. 19 aufweist.

Der Prozeßablauf in der Klebestation 10 ist folgender. Zunächst werden die auf dem Eingangs-Rundschalttisch 8 liegenden ersten Substrate 3, deren zu verklebende Flächen nach oben weisen, und die beim Verklebevorgang das untere Substrat darstellen, an einer bestimmten Rundtischposition mit dem Händler 19 auf einen Tisch 20 der Vorbeschichtungseinrichtung 17 gelegt und dort mit einer Beschichtungseinrichtung 21 vorbeschichtet, um für das eigentliche Klebemittel oder den Hauptlack in einem nachfolgend noch zu beschreibenden Verfahrensschritt eine optimale Gleitfähigkeit zu schaffen. Die vorbeschichteten ersten Substrate 3 werden danach wieder auf dem Eingangs-Rundschalttisch 8 abgelegt.

Mit dem Einarmhändler 18 mit Präzisionsantrieb werden die ersten Substrate 3 vom Eingangs-Rundschalttisch 8 in die beiden Klebemittel-Ausschleudereinrichtungen 11 bzw. 12 gelegt. In einem nächsten Verfahrensschritt wird mit jeweils der Klebemittelaufbringeinrichtung bzw. der Hauptdispensereinheit 13, 14 ein Klebemittel, beispielsweise ein UV-Kunststofflack etwa in Form eines Rings aufgetragen. Danach wird das zweite, obere Substrat 6 vom Eingangs-Rundschalttisch 8 ebenso entnommen und genau zentrisch auf das erste, untere Substrat 3 aufgelegt. Die Teller der Klebemittel-Ausschleudereinrichtungen 11, 12 werden in Drehung versetzt, so daß das Klebemittel zwischen den Substraten 3 und 6 ausgeschleudert wird.

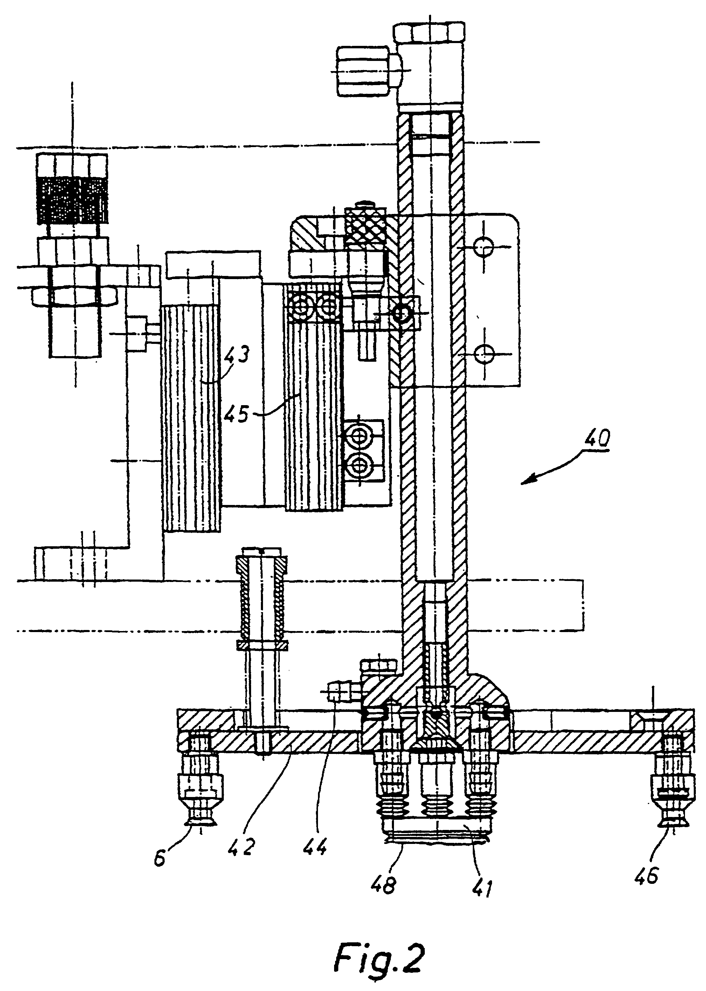

Wie im nachfolgenden noch anhand der Fig. 2 im einzelnen erläutert werden wird, kann das obere oder das untere Substrat 3 bzw. 6 eine leichte Biegung aufweisen, wodurch das Entfernen von Luftblasen oder Einschlüssen, die beim Aufbringen des Klebemittels oder Kleberings darin auftreten, erleichtert und die Klebemittelverteilung zusätzlich verbessert und beschleunigt wird. Über den Präzisionsantrieb des Einarmhändlers 18 kann nicht nur die Geschwindigkeit, mit dem das zweite obere Substrat 6 aufgelegt wird, sondern auch ein genauer Druck, mit dem dieses Substrat 6 auf dem Klebemittelring aufgelegt wird, sowie die Verzögerung, mit der der Substratrand des verbogenen Substrats freigegeben wird, genau gesteuert werden.

Nach dem Ausschleudern tritt die Substratscheibenrand-Reinigungseinrichtung 15 bzw. 16 in Funktion, bei der bei der dargestellten Ausführungsform eine Klebemittel-Absaugeinrichtung federnd an den Rand der verklebten Substratscheibe gedrückt wird. Durch die dadurch erfolgte Randreinigung wird gleichzeitig eine zusätzliche Versiegelung des Substratscheibenrandes erreicht, wodurch die Produktqualität verbessert wird.

Die verklebten Substratscheiben 23 werden danach mit einen Einarmhändler 24 aus der Verklebestation 10 entnommen und auf einen weiteren Rundschalttisch 25 einer Trocknerstation 26 gelegt, in der die Substratscheiben 23 getaktet unter einen UV-Trockner 27 geführt und mit UV-Lampen bestrahlt und dadurch getrocknet werden. Der UV-Trockner 27 ist vorzugsweise mit zwei bis vier 4 HPA-Lampen in ein oder zwei Stationen ausgestattet.

Die Trockenstation 26 weist weiterhin einen Glasplattenhändler 28 in Form einer Schieber- oder Wechseleinrichtung auf, mit der Quarz- oder Glasplatten 29 auf die zu trocknenden Substratscheiben 23 aufgelegt werden und die mit ihrem Eigengewicht auf den Substratscheiben 23 liegen. Mit dem Glasplattenhändler 28 werden die Glasplatten 29 nach dem Entfernen von den Substratscheiben 23 unter ionisierter Luft gekühlt, um danach wieder auf weitere Substratscheiben 23 aufgelegt werden zu können.

Die getrockneten Substratscheiben 23 werden mit einem dreiarmigen Händler 30 vom Rundschalttisch 25 der Trocknerstation 26 einer Nehmerstation 31 zugeführt, in der sich eine Inspektionsstation 34 befindet, die die fertigen Substratscheiben 23 einer Qualitätskontrolle unterzieht und in Abhängigkeit vom Ergebnis dieser Kontrolle bzw. deren Meßwerten den dreiarmigen Händler 30 so steuert, daß er die guten Substratscheiben 23 auf einen weiteren Rundtisch 35 und die schlechten Substratscheiben 23 auf eine Ausschuß-Spindel 36 ablegt.
Auf Grund der kompakten Bauweise weist die erfindungsgemäße Vorrichtung kleine Abmessungen mit einer Länge von 2900 mm, einer Breite von 1250 mm und einer Höhe von 1900 mm auf, die einen flexiblen Einsatz der Vorrichtung auch in kleinsten Räumen sowohl als Einzelmaschine als auch als eine in einer Fertigungsreihe integrierten Maschine ermöglicht.

Fig. 2 zeigt in schematischer und teilweisen Querschnittsdarstellung eine Ausführungsform für eine Biegeeinrichtung 40 zum Verbiegen eines der zu verklebenden Substrate oder beider zu verklebender Substrate an seinen Randbereichen weg vom jeweils anderen Substrat. Die Biegeeinrichtung 40 weist einen Innengreifer 41 und einen Außengreifer 42 auf, die mittels eines Hydraulikzylinders 43 relativ zueinander beweglich sind. Der Innengreifer 41 weist Sauger 48 auf, die über entsprechende Unterdruckanschlüsse 44 mit einer Unterdruckquelle verbunden sind und das Substrat 3 oder 6 ergreifen, um es mittels eines Anheb- und Absenkzylinders 45 zu transportieren.

Der Außengreifer 42 weist mehrere über den Außengreiferumfang verteilte Sauger 46 auf, die zur Verbiegung des Substrats 3 bzw. 6 in seinen Außenbereichen angreifen. Die Biegung tritt dann ein, wenn der Außengreifer 42 mit dem Zylinder 43 bezüglich des Innengreifers 41 angehoben wird.

Die Erfindung wurde zuvor anhand bevorzugter Ausführungsbeispiele erläutert. Dem Fachmann sind jedoch zahlreiche Ausgestaltungen und Abwandlungen möglich, ohne daß dadurch der Erfindungsgedanke verlassen wird. Die erfindungsgemäße Vorrichtung wurde zuvor in Zusammenhang mit der Fertigung von Digital-Video-Disks beschrieben. Die Prinzipien der Erfindung sind jedoch auch auf Verfahren und Vorrichtungen für die Herstellung anderer Podukte einsetzbar, bei denen zwei Substrate miteinander zu verkleben sind.

## Patentansprüche

1. Verfahren zum Verkleben von zwei Substraten (3, 6) zu einer Substratscheibe (23), bei dem ein Klebemittel auf eine zu verklebende Fläche eines ersten Substrats (3) aufgebracht, und ein zweites Substrat (6) mit seiner zu verklebenden Fläche auf das erste Substrat aufgelegt wird, und bei dem die Substrate (3, 6) zum Ausschleudern des Klebemittels um ihre Mittelachsen gedreht werden, **dadurch gekennzeichnet, daß** die zu verklebende Fläche des ersten Substrats (3) vor Aufbringen des Klebemittels mit einer Vorbeschichtung versehen wird.

2. Verfahren nach Anspruch 1, **dadurch gekennzeichnet, daß** das Klebemittel ein Ultraviolett-Kunststofflack ist.

3. Verfahren nach einem der vorhergehenden Ansprüche, **dadurch gekennzeichnet, daß** das Klebemittel als Kleberring auf die zu verklebende Fläche des ersten Substrats (3) aufgebracht wird.

4. Verfahren nach einem der vorhergehenden Ansprüche, **dadurch gekennzeichnet, daß** ein einstellbarer Druck auf das zweite Substrat (6) nach Auflegen auf das Klebemittel ausgeübt wird.

5. Verfahren nach einem der vorhergehenden Ansprüche, **dadurch gekennzeichnet, daß** wenigstens eines der Substrate (3, 6) beim Auflegen auf das andere Substrat (6, 3) in den Randbereichen vom anderen Substrat (6, 3) weg gebogen wird.

6. Verfahren nach einem der vorhergehenden Ansprüche, **dadurch gekennzeichnet, daß** eine Quarz- oder Glasplatte (29) während des Trocknens auf die Substratscheibe (23) aufgelegt wird.

7. Verfahren nach Anspruch 6, **dadurch gekennzeichnet, daß** die Quarz- oder Glasplatte (29) mit ionisierter Luft gekühlt wird.

8. Verfahren nach einem der Ansprüche 6 oder 7, **dadurch gekennzeichnet, daß** die Trocknung in einer Stickstoffumgebung erfolgt.

9. Verfahren nach einem der vorhergehenden Ansprüche, **dadurch gekennzeichnet, daß** die Ränder der verklebten Substratscheiben (23) nach dem Ausschleudern des Klebemittels gereinigt werden.

10. Verfahren nach Anspruch 9, **dadurch gekennzeichnet, daß** die Ränderreinigung in der Station (10) erfolgt, in der das Verkleben der Substrate (3, 6) vorgenommen wird.

11. Verfahren nach Anspruch 9 oder 10, **dadurch gekennzeichnet, daß** eine Klebemittel-Absaugvorrichtung federnd an die Ränder der verklebten Substratscheibe (23) angedrückt wird.

12. Vorrichtung zum Verkleben von zwei Substraten (3, 6) zu einer Substratscheibe (23) mit wenigstens einer Verklebestation (10), wenigstens einer Klebemittelaufbringeinrichtung (13, 14), und wenigstens einer Klebemittel-Ausschleudereinrichtung (11, 12), **gekennzeichnet durch** eine Vorbeschichtungseinrichtung (17).

13. Vorrichtung nach Anspruch 12, **gekennzeichnet durch** eine Druckeinrichtung, die während des Klebevorgangs einen einstellbaren Druck auf wenigstens eine Substratscheibe (3, 6) ausübt.

14. Vorrichtung nach Anspruch 12 oder 13, **gekennzeichnet durch** wenigstens einer Biegeeinrichtung (40) zum Verbiegen wenigstens eines zu verklebenden Substrats (3, 6) an seinen Randbereichen weg vom anderen Substrat (3, 6).

15. Vorrichtung nach Anspruch 14, **dadurch gekennzeichnet, daß** die Biegeeinrichtung (40) einen im Innenbereich des zu biegenden Substrats (3, 6) angreifenden Innengreifer (41) und einen im Außenbereich des zu biegenden Substrats (3, 6) angreifenden Außengreifer (42) aufweist.

16. Vorrichtung nach Anspruch 15, **dadurch gekennzeichnet, daß** der Innengreifer (41) und/oder der Außengreifer (42) in Achsenrichtung der Substrate (3, 6) relativ zueinander bewegbar sind.

17. Vorrichtung nach einem der Ansprüche 15 der 16, **dadurch gekennzeichnet, daß** der Innengreifer (41) und/oder der Außengreifer (42) Sauger (43 bzw. 46) aufweisen.

18. Vorrichtung nach einem der Ansprüche 12 bis 17, **gekennzeichnet durch** eine Trocknerstation (26) mit einer Quarz- oder Glasplatten-Auflegereinheit (28).

19. Vorrichtung nach Anspruch 18, **dadurch gekennzeichnet, daß** die Trocknerstation (26) eine Quarz- oder Glasplatten-Kühleinrichtung aufweist.

20. Vorrichtung nach Anspruch 19, **dadurch gekennzeichnet, daß** das Kühlmittel ionisierte Luft ist.

21. Vorrichtung nach einem der Ansprüche 18 bis 20, **dadurch gekennzeichnet, daß** die Trocknerstation (26) Ultraviolett-Lampen aufweist, und daß im Bereich der Substratränder Reflexionsflächen für die Lampenstrahlung vorgesehen sind.

22. Vorrichtung nach einem der Ansprüche 12 bis 21, **gekennzeichnet durch** eine nach der Trocknungsstation (26) angeordnete Inspektionsstation (34).

23. Vorrichtung nach einem der Ansprüche 12 bis 22 **gekennzeichnet durch** eine Substratscheibenrand-Reinigungseinrichtung (15, 16).

24. Vorrichtung nach Anspruch 23, **dadurch gekennzeichnet, daß** die Substratscheibenrand-Reinigungseinrichtung (15, 16) eine Klebemittel-Absaugeinrichtung aufweist.

25. Vorrichtung nach Anspruch 23 oder 24, **dadurch gekennzeichnet, daß** die Substratscheibenrand-Reinigungseinrichtung (15, 16) federnd an den Substratscheibenrand andrückbar ist.

26. Vorrichtung nach einem der Ansprüche 23 bis 25, **dadurch gekennzeichnet, daß** die Substratscheibenrand-Reinigungseinrichtung (15, 16) Teil der Klebemittel-Ausschleudereinrichtung (11, 12) ist.

## Claims

1. Method of gluing two substrates (3, 6) to form a substrate wafer (23), in which an adhesive is applied to a surface, which is to be glued, of a first substrate (3), and a second substrate (6) is placed, by its surface which is to be glued, on the first substrate, and in which the substrates (3, 6) are rotated about their centre axes for centrifuging the adhesive, **characterised in that** the surface to be glued of the first substrate (3) is provided with a preliminary coating before application of the adhesive.

2. Method according to claim 1, **characterised in that** the adhesive is an ultraviolet synthetic material lacquer.

3. Method according to one of the preceding claims, **characterised in that** the adhesive is applied as a glue ring to the surface to be glued of the first substrate (3).

4. Method according to one of the preceding claims, **characterised in that** a settable pressure is exerted on the second substrate (6) after placing onto the adhesive.

5. Method according to one of the preceding claims, **characterised in that** at least one of the substrates (3, 6) on placing onto the other substrate (6, 3) is bent away from the other substrate (6, 3) in the edge regions.

6. Method according to one of the preceding claims, **characterised in that** a quartz or glass plate (29) is placed on the substrate wafer (23) during drying.

7. Method according to claim 6, **characterised in that** the quartz or glass plate (29) is cooled with ionised air.

8. Method according to one of claims 6 and 7, **characterised in that** the drying is carried out in a nitrogen atmosphere.

9. Method according to one of the preceding claims, **characterised in that** the edges of the glued substrate wafers (23) are cleaned after centrifuging of the adhesive.

10. Method according to claim 9, **characterised in that** the edge cleaning is carried out in the station (10) in which the gluing of the substrates (3, 6) is undertaken.

11. Method according to claim 9 or 10, **characterised in that** an adhesive suction device is resiliently pressed against the edges of the glued substrate wafer (23).

12. Device for gluing two substrates (3, 6) to form a substrate wafer (23), comprising at least one gluing station (10), at least one adhesive application device (13, 14) and at least one adhesive centrifuging device (11, 12), **characterised by** a precoating device (17).

13. Device according to claim 12, **characterised by** a pressure device which during the gluing process exerts a settable pressure on at least one substrate (3, 6).

14. Device according to claim 12 or 13, **characterised by** at least one bending device (40) for bending at least one substrate (3, 6), which is to be glued, at its edge regions away from the other substrate (3, 6).

15. Device according to claim 14, **characterised in that** the bending device (40) comprises an inner gripper (41) engaging in the inner region of the substrate (3, 6) to be bent and an outer gripper (42) engaging in the outer region of the substrate (3, 6) to be bent.

16. Device according to claim 15, **characterised in that** the inner gripper (41) and/or the outer gripper (42) is or are movable in axial direction of the substrates (3, 6) relative to the respective other gripper.

17. Device according to one of claims 15 and 16, **characterised in that** the inner gripper (41) and/or the outer gripper (42) comprise or comprises a suction device or suction devices (43 or 46).

18. Device according to one of claims 12 to 17, **characterised by** a drying station (26) with a quartz or glass plate arm unit (28).

19. Device according to claim 18, **characterised in that** the drying station (26) comprises a quartz or glass plate cooling device.

20. Device according to claim 9, **characterised in that** the coolant is ionised air.

21. Device according to one of claims 18 to 20, **characterised in that** the drying station (26) comprises ultraviolet lamps and that reflection surfaces for the lamp radiation are provided in the region of the substrate edges.

22. Device according to one of claims 12 to 21, **characterised by** an inspection station (34) arranged after the drying station (26).

23. Device according to one of claims 12 to 22, **characterised by** a substrate wafer edge cleaning device (15, 16).

24. Device according to claim 23, **characterised in that** the substrate wafer edge cleaning device (15, 16) comprises an adhesive suction device.

25. Device according to claim 23 or 24, **characterised in that** the substrate wafer edge cleaning device (15, 16) can be pressed resiliently against the substrate wafer edge.

26. Device according to one of claims 23 to 25, **characterised in that** the substrate wafer edge cleaning device (15, 16) is part of the adhesive centrifuging device (11, 12).

## Revendications

1. Procédé de collage de deux substrats (3, 6) pour former un disque de substrat (23), où une colle est appliquée sur une face à coller d'un premier substrat (3), et un deuxième substrat (6) est appliqué avec sa face à coller sur le premier substrat et où les substrats (3, 6), pour la centrifugation de la colle, sont amenés à tourner autour de leurs axes médians, **caractérisé en ce que** la face à coller du premier substrat (3), avant l'application de la colle, est pourvue d'un recouvrement préalable.

2. Procédé selon la revendication 1, **caractérisé en ce que** la colle est une laque de matière synthétique ultraviolette.

3. Procédé selon l'une des revendications précédentes, **caractérisé en ce que** la colle est appliquée sous forme d'anneau de colle sur la face à coller du premier substrat (3).

4. Procédé selon l'une des revendications précédentes, **caractérisé en ce qu'**une pression réglable est exercée sur le second substrat (6) après l'application de la colle.

5. Procédé selon l'une des revendications précédentes, **caractérisé en ce qu'**au moins l'un des substrats (3, 6), lors de l'application sur l'autre substrat (6, 3), est courbé dans les zones de bord au loin de l'autre substrat (6, 3).

6. Procédé selon l'une des revendications précédentes, **caractérisé en ce qu'**une plaque de quartz ou de verre (29) est placée pendant le séchage sur le disque de substrat (23).

7. Procédé selon la revendication 6, **caractérisé en ce que** la plaque de quartz ou de verre (29) est refroidie avec de l'air ionisé.

8. Procédé selon l'une des revendications 6 ou 7, **caractérisé en ce que** le séchage a lieu dans un environnement d'azote.

9. Procédé selon l'une des revendications précédentes, **caractérisé en ce que** les bords des disques de substrat collés (23) sont nettoyés après la centrifugation de la colle.

10. Procédé selon la revendication 9, **caractérisé en ce que** le nettoyage des bords a lieu dans le poste (10) dans lequel est effectué le collage des substrats (3, 6).

11. Procédé selon la revendication 9 ou 10, **caractérisé en ce qu'**un dispositif d'aspiration de colle est appliqué élastiquement aux bords du disque de substrat collé (23).

12. Dispositif pour le collage de deux substrats (3, 6) en un disque de substrat (23), avec au moins un poste de collage (10), au moins une installation d'application de colle (13, 14) et au moins une installation de centrifugation de colle (11, 12), **caractérisé par** une installation de recouvrement préalable (17).

13. Dispositif selon la revendication 12, **caractérisé par** une installation de compression qui exerce pendant l'opération de collage une pression réglable sur au moins un disque de substrat (3, 6).

14. Dispositif selon la revendication 12 ou 13, **caractérisé par** au moins une installation de courbure (40) pour courber au moins l'un des substrats à coller (3, 6) à ses zones de bord au loin de l'autre substrat (3, 6).

15. Dispositif selon la revendication 14, **caractérisé en ce que** l'installation de courbure (40) présente une griffe interne (41) s'appliquant à la zone intérieure du substrat à courber (3, 6) et une griffe extérieure (42) s'appliquant à la zone extérieure du substrat à courber (3, 6).

16. Dispositif selon la revendication 15, **caractérisé en ce que** la griffe interne (41) et/ou la griffe externe (42) sont déplaçables dans la direction d'axe des substrats (3, 6) l'une relativement à l'autre.

17. Dispositif selon l'une des revendications 15 ou 16, **caractérisé en ce que** la griffe interne (41) et/ou la griffe externe (42) présente des organes d'aspiration (43 respectivement 46).

18. Dispositif selon l'une des revendications 12 à 17, **caractérisé par** un poste de séchage (26) avec une unité d'application de plaque de quartz ou de verre (28).

19. Dispositif selon la revendication 18, **caractérisé en ce que** le poste de séchage (26) présente une installation de refroidissement des plaques de quartz ou de verre.

20. Dispositif selon la revendication 19, **caractérisé en ce que** le moyen de refroidissement est de l'air ionisé.

21. Dispositif selon l'une des revendications 18 à 20, **caractérisé en ce que** le poste de séchage (26) présente des lampes ultraviolettes, et **en ce que** sont prévues au voisinage des bords de substrat des faces de réflexion pour le rayonnement des lampes.

22. Dispositif selon l'une des revendications 12 à 21, **caractérisé par** un poste d'inspection (34) disposé en aval du poste de séchage (26).

23. Dispositif selon l'une des revendications 12 à 22, **caractérisé par** une installation de nettoyage (15, 16) du bord de disque de substrat.

24. Dispositif selon la revendication 23, **caractérisé en ce que** l'installation de nettoyage (15, 16) du bord du disque de substrat présente une installation d'aspiration de colle.

25. Dispositif selon la revendication 23 ou 24, **caractérisé en ce que** l'installation de nettoyage (15, 16) du bord du disque de substrat peut être appliquée élastiquement au bord du disque de substrat.

26. Dispositif selon l'une des revendications 23 à 25, **caractérisé en ce que** l'installation de nettoyage (15, 16) du bord du disque de substrat fait partie d'une installation de centrifugation de colle (11, 12).
